(19) Europäisches Patentamt
European Patent Office
Office européen des brevets

(11) **EP 3 591 610 B1**

(12) **FASCICULE DE BREVET EUROPEEN**

(45) Date de publication et mention
de la délivrance du brevet:
**27.01.2021 Bulletin 2021/04**

(51) Int Cl.:
***G06T 5/00*** *(2006.01)*  ***G06T 5/50*** *(2006.01)*

(21) Numéro de dépôt: **19188204.2**

(22) Date de dépôt: **10.06.2016**

(54) **PROCEDE DE VISUALISATION D'UNE IMAGE MULTISPECTRALE**

ANZEIGEVERFAHREN EINES MULTISPEKTRALEN BILDES

METHOD FOR GENERATING A MULTISPECTRAL IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.06.2015 FR 1555284**

(43) Date de publication de la demande:
**08.01.2020 Bulletin 2020/02**

(62) Numéro(s) de document de la (des) demande(s) initiale(s) en application de l'article 76 CBE:
**16739214.1 / 3 308 352**

(73) Titulaire: **Safran Electronics & Defense 75015 Paris (FR)**

(72) Inventeurs:
• **BOUSQUET, Marc**
**92100 BOULOGNE-BILLANCOURT (FR)**
• **FOUBERT, Philippe**
**92100 BOULOGNE-BILLANCOURT (FR)**
• **TOUATI, Thierry**
**92100 BOULOGNE-BILLANCOURT (FR)**
• **ROUX, Nicolas**
**92100 BOULOGNE-BILLANCOURT (FR)**

(74) Mandataire: **Plasseraud IP**
**66, rue de la Chaussée d'Antin**
**75440 Paris Cedex 09 (FR)**

(56) Documents cités:
**FR-A1- 3 011 663  FR-A1- 3 013 876**

• **GOUDAIL F ET AL: "SOME PRACTICAL ISSUES IN ANOMALY DETECTION AND EXPLOITATION OF REGIONS OF INTEREST IN HYPERSPECTRAL IMAGES", APPLIED OPTICS, OPTICAL SOCIETY OF AMERICA, WASHINGTON, DC; US, vol. 45, no. 21, 20 juillet 2006 (2006-07-20), pages 5223-5236, XP001245429, ISSN: 0003-6935, DOI: 10.1364/AO.45.005223**
• **LINGFEI MENG AND JOHN P KEREKES: "Adaptive target detection with a polarization-sensitive optical system", APPLIED OPTICS, OPTICAL SOCIETY OF AMERICA, WASHINGTON, DC; US, vol. 50, no. 13, 1 mai 2011 (2011-05-01), pages 1925-1932, XP001563122, ISSN: 0003-6935, DOI: 10.1364/AO.50.001925 [extrait le 2011-04-28]**

EP 3 591 610 B1

**Description**

La présente invention concerne un procédé de visualisation d'une image multispectrale.

La surveillance d'un environnement est une tâche courante, notamment pour détecter des intrusions adverses. Une telle surveillance présente des difficultés particulières lorsqu'elle est effectuée dans environnement terrestre. En effet, un environnement terrestre tel qu'un paysage de campagne peut contenir un grand nombre d'éléments distincts aux contours irréguliers tels que des arbres, des buissons, des rochers, des constructions, des panneaux de signalisation routière, etc, qui rendent complexes l'interprétation de l'image et la recherche d'éléments intrus. En outre, dans certaines circonstances, telles qu'une surveillance militaire, un élément intrus peut être camouflé pour que sa détection dans le paysage soit plus difficile. De façon courante, un tel camouflage est efficace contre l'observation en lumière visible, notamment pour des longueurs d'onde qui sont entre 0,45 $\mu$m (micromètre) et 0,65 $\mu$m, et tout particulièrement autour de 0,57 $\mu$m qui correspond au maximum de sensibilité de l'œil humain.

Pour réussir à détecter l'élément intrus, qui est aussi appelé cible dans le jargon de l'Homme du métier, malgré un paysage complexe et un camouflage éventuel de la cible, il est connu d'effectuer une observation multispectrale de l'environnement. Une telle observation multispectrale consiste à saisir simultanément plusieurs images du même paysage selon des bandes spectrales différentes, afin qu'une cible qui n'apparaîtrait pas distinctement dans les images saisies selon certaines bandes spectrales soit révélée par les images correspondant à d'autres bandes spectrales. Chaque bande spectrale peut être étroite, avec un intervalle de valeurs de longueur d'onde qui s'étend sur quelques nanomètres ou quelques dizaines de nanomètres, ou qui peut être plus large. Il est ainsi connu qu'une observation dans l'intervalle de longueur d'onde compris entre 0,6 $\mu$m et 2,5 $\mu$m peut être efficace pour révéler une cible dans un environnement de végétation, alors que la cible est camouflée efficacement contre une détection par observation dans l'intervalle de lumière visible pour l'œil humain.

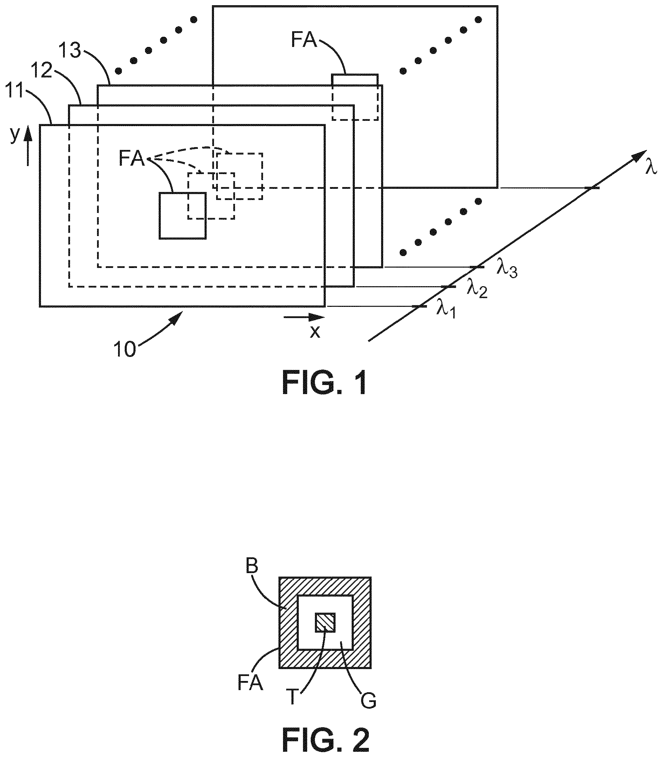

La référence 10 dans la figure 1 désigne globalement une telle image multispectrale, formée de plusieurs images individuelles 11, 12, 13,... qui ont été saisies simultanément pour une même scène. Autrement dit, les images individuelles 11, 12, 13,... ont été saisies par des voies d'imagerie disposées en parallèle, activées en même temps et ayant le même champ optique d'entrée. Toutefois, chaque image 11, 12, 13,... a été saisie en sélectionnant une partie du rayonnement issu de la scène, qui est séparée de chaque partie du rayonnement utilisée pour une autre des images 11, 12, 13,... Cette séparation est réalisée en fonction de la longueur d'onde $\lambda$ du rayonnement, d'une des façons connues de l'Homme du métier, si bien que chacune des images 11, 12, 13,..., appelée image spectrale, a été saisie avec le rayonnement dont la longueur d'onde appartient à un intervalle distinct, de préférence sans recouvrement avec chacun des intervalles des autres images spectrales. Le nombre des images spectrales 11, 12, 13,... peut être quelconque. Une telle image multispectrale peut aussi être dite hyperspectrale, en fonction du nombre des images spectrales qui la composent et de la largeur de chacun des intervalles de longueur d'onde de celles-ci. Par exemple, $\lambda_1$, $\lambda_2$, $\lambda_3$,... désignent des valeurs centrales pour les intervalles de longueur d'onde respectifs des images spectrales 11, 12, 13,... En outre, x et y désignent deux dimensions spatiales, qui sont communes à toutes les images spectrales 11, 12, 13,...

Chaque image spectrale 11, 12, 13,... peut être traitée pour l'invention à partir d'un fichier qui est lu sur un support de stockage, ou à partir d'un flux numérique qui est produit par un instrument de prise de vues à une cadence vidéo. Selon le cas, les données d'images peuvent être des données brutes produites par un ou plusieurs capteurs d'images, ou des données déjà traitées pour certaines opérations telles que le recadrage des images spectrales les unes par rapport aux autres, une correction de sur- ou sous-exposition, etc.

Toutefois, une telle détection multispectrale peut encore être insuffisante pour permettre à un opérateur qui est en charge de la surveillance de détecter la présence d'une cible dans un environnement terrestre. En effet, dans certaines circonstances, aucune des images qui sont associées séparément aux bandes spectrales ne fait apparaître la cible suffisamment distinctement pour que l'opérateur de surveillance puisse détecter la cible dans ces images, compte tenu du temps d'observation alloué. Pour de telles situations, il est encore connu d'améliorer l'efficacité de la détection de cible en présentant à l'opérateur une image qui est construite par projection de Fisher. Un tel procédé est connu notamment de l'article «Some practical issues in anomaly détection and exploitation of regions of interest in hyperspectral images», de F. Goudail et al., Applied Optics, Vol. 45, No. 21, pp. 5223-5236. D'après ce procédé, l'image qui est présentée à l'opérateur est construite en combinant en chaque point de celle-ci, appelé pixel, les valeurs d'intensités qui sont saisies séparément pour plusieurs bandes spectrales, de façon à optimiser un contraste de l'image résultante. Théoriquement, cette construction d'image consiste à projeter pour chaque pixel le vecteur des intensités qui ont été saisies pour les bandes spectrales sélectionnées, sur une direction optimale dans l'espace multidimensionnel des valeurs d'intensités spectrales. Cette direction optimale de projection peut être déterminée à partir de la matrice de covariance des intensités spectrales, estimée sur l'ensemble du champ d'image. Cela revient en fait à rechercher une corrélation maximale entre les variations d'intensités qui sont présentes dans les images différentes saisies selon les bandes spectrales sélectionnées. Le contraste de l'image qui est présentée à l'opérateur est ainsi au moins égal à celui de chaque image spectrale séparée, si bien que la détection de cible par l'opérateur est à la fois plus efficace et plus fiable. Alternativement, la direction optimale de projection peut être recherchée directement en utilisant un algorithme d'optimisation usuel, pour maximiser le contraste d'image en variant la direction de projection dans l'espace multidimensionnel des intensités spectrales.

Il est courant de restreindre l'amélioration du contraste par projection de Fisher, à une fenêtre spatiale à l'intérieur de l'image multispectrale, dite fenêtre d'analyse, qui est plus petite que l'image entière. La fenêtre d'analyse, notée FA sur la figure 1, est alors appliquée identiquement à toutes les images spectrales 11, 12, 13,... qui constituent l'image multispectrale 10. Cette restriction à la fenêtre d'analyse concerne aussi bien la partie de l'image multispectrale à partir de laquelle la projection de Fisher est déterminée, que la partie de l'image multispectrale à laquelle cette projection de Fisher est appliquée. Il en résulte une réduction significative de la durée de calcul nécessaire pour obtenir à un contraste amélioré, ce qui est avantageux pour une exécution en temps réel lors d'une mission de surveillance d'un environnement.

Une image de visualisation est alors présentée à l'opérateur de la surveillance, dans laquelle le contenu de l'image multispectrale à l'intérieur de la fenêtre d'analyse est affiché tel qu'il résulte de la projection de Fisher.

Pour déterminer la projection de Fisher, il est nécessaire de définir une zone de cible à l'intérieur de la fenêtre d'analyse, et une zone de fond qui lui est associée. La figure 2 montre une disposition courante de la zone de cible dans la fenêtre d'analyse FA : la zone de cible, notée T, est située au centre de la fenêtre d'analyse FA, et possède une forme qui peut être carrée de quelques pixels de côté, par exemple 3 x 3 ou 7 x 7. La zone de fond, notée B, entoure la zone de cible T, en étant séparée de celle-ci par une zone intermédiaire, ou zone de garde, notée G. La zone de fond B peut être limitée extérieurement par la fenêtre d'analyse FA elle-même.

Le document FR 3 011 663 A1 décrit un tel procédé de visualisation d'une image multispectrale.

Le contraste qui est destiné à être maximisé par la projection de Fisher est calculé entre le contenu de l'image multispectrale dans la zone de cible, et le contenu de cette même image multispectrale dans la zone de fond. Ainsi, pour déterminer la projection de Fisher, les intensités des images spectrales sont moyennées spatialement sur la zone de cible d'une part, et sur la zone de fond d'autre part. De ce fait, l'efficacité de la projection de Fisher pour renforcer le contraste peut être réduite dans les situations suivantes :

/i/ cas d'une cible bariolée, c'est-à-dire qui présente des caractéristiques spectrales différentes entre des parties voisines de la cible qui sont contenues simultanément dans la zone de cible ; et

/ii/ cas de plusieurs cibles chacune de petites dimensions qui seraient contenues simultanément dans la zone de cible, ou dont certaines seraient dans la zone de cible et d'autres dans la zone de fond.

Pour éviter de telles situations qui sont défavorables pour l'efficacité de la projection de Fisher à renforcer le contraste, il serait possible de réduire la taille de la zone de cible par rapport à la fenêtre d'analyse. Mais un risque apparaît alors de manquer une cible de petite dimension qui serait présente dans la scène, malgré un déplacement de la fenêtre d'analyse dans la scène. En effet, un balayage de la scène par déplacement de la zone d'analyse pourrait laisser involontairement une telle cible de petite dimension entre deux segments successifs du balayage.

A partir de cette situation, des premiers buts de l'invention consistent à perfectionner le traitement d'une image multispectrale par projection de Fisher, pour améliorer l'efficacité à révéler des cibles dans un grand nombre de situations, notamment certaines des situations évoquées ci-dessus.

Des buts complémentaires de l'invention consistent à améliorer l'efficacité à révéler des cibles à partir d'une image multispectrale, dans certaines des autres situations suivantes :

/iii/ présence d'un élément de scène parasite dans la zone de fond, qui possède des caractéristiques spectrales très différentes de celles du reste de la zone de fond, voire des caractéristiques spectrales qui peuvent ressembler à celles de la cible. De telles situations sont par exemple le cas d'une zone de fond qui est à cheval sur un sommet de colline et une portion de ciel, et le cas d'un panneau de signalisation routière par rapport à la détection d'un véhicule qui apparaîtrait sur la route ;

/iv/ cas d'une cible qui est suffisamment étendue pour recouvrir une partie au moins de la zone de cible et simultanément une partie au moins de la zone de fond, malgré la présence de la zone de garde pour séparer les deux zones de cible et de fond ;

/v/ cas de cibles mobiles dans la scène ; et

/vi/ cas d'images multispectrales qui sont saisies successivement pour former une vidéo multispectrale, mais en étant affectées d'un tremblement qui déplace la scène, y compris la ou les cible(s) potentielles, entre deux des images multispectrales qui sont saisies l'une après l'autre.

Pour atteindre certains au moins de ces buts ou d'autres, l'invention propose un procédé de visualisation par un opérateur sur une unité d'affichage, d'une image multispectrale formée de plusieurs images spectrales d'une même scène qui ont été saisies à un même instant respectivement dans des intervalles spectraux séparés, ce procédé étant défini par la revendication 1.

Ainsi, chaque image élémentaire optimise le contraste par rapport à l'une des zones de cible, séparément des autres zones de cible. Une cible ou une portion d'une cible bariolée qui est contenue dans l'une des zones de cible peut ainsi être révélée dans l'image intermédiaire qui a été construite à partir de cette zone de cible, indépendamment du contenu des autres zones de cible. Le procédé de l'invention est donc plus robuste par rapport aux situations /i/ et /ii/.

De façon générale, certaines au moins des zones de cible peuvent présenter des recouvrements entre elles dans la fenêtre d'analyse. De tels recouvrements peuvent être avantageux dans le cas de cibles bariolées (situation /i/ présentées plus haut), pour que certaines limites de zones de cible soient plus proches des limites entre les parties de la cible qui ont des caractéristiques spectrales différentes.

Eventuellement, dans certaines mises en œuvre de l'invention, les zones de cible peuvent être alignées dans la fenêtre d'analyse. Lorsque la scène est balayée par un déplacement de la fenêtre d'analyse dans l'image multispectrale, la direction d'alignement des zones de cible est avantageusement à peu près perpendiculaire à une direction de déplacement de la fenêtre d'analyse. Ainsi, le renfort de contraste est réalisé à partir d'une fauchée produite par les zones de cible, qui est plus large. De façon similaire, lorsque la scène est une portion d'un paysage terrestre, les zones de cible peuvent être alignées de préférence à peu près parallèlement à une direction qui est verticale ou horizontale par rapport au paysage terrestre. En effet, un paysage terrestre est naturellement parcouru par un observateur en déplaçant sa direction de regard verticalement ou horizontalement.

Dans d'autres modes de mise en œuvre de l'invention, les zones de cible peuvent être disposées avantageusement dans la fenêtre d'analyse de façon à former une croix ou un pavé. De telles dispositions des zones de cible peuvent être avantageuses dans les situations /v/ et /vi/ énoncées plus haut, notamment pour réaliser une poursuite de cible.

Selon une première caractéristique de l'invention, une zone de fond distincte est associée à chaque zone de cible de la même fenêtre d'analyse. Possiblement, pour toutes ces zones de cible, une disposition relative de la zone de cible et de la zone de fond qui sont associées ensemble peut être constante.

Selon une deuxième caractéristique de l'invention, l'agencement de ces zones de fond est tel qu'aucune zone de fond n'a de recouvrement avec l'une quelconque des zones de cible. Ainsi, une cible qui est située à l'intérieur d'une des zones de cible ne perturbe pas l'homogénéité spectrale de la zone de fond qui est associé à une autre des zones de cible.

Selon un perfectionnement de l'invention, la zone de fond qui est associée à chaque zone de cible peut résulter d'une sélection d'au moins un segment de zone de fond parmi plusieurs segments de zone de fond qui sont susceptibles d'être associés à cette zone de cible, cette sélection étant réalisée pour réduire des écarts qui existent entre des signatures spectrales respectives des segments de zone de fond sélectionnés pour une même des zones de cible. La zone de fond qui est associée à la zone de cible considérée est alors la réunion des segments de zone de fond qui ont été sélectionnés pour cette zone de cible. Alors, selon ce perfectionnement, la zone de fond qui est associée à chaque zone de cible peut être adaptée en fonction du contenu de la scène dans un voisinage de cette zone de cible, afin d'obtenir une zone de fond qui soit plus homogène spectralement. Un tel perfectionnement est particulièrement avantageux dans les situations /iii/ et /iv/ qui ont été énoncées plus haut.

Enfin, selon une troisième caractéristique de l'invention, à la sous-étape /2-1/ pour chaque zone de cible dans la fenêtre d'analyse, la projection de Fisher est déterminée en pondérant les valeurs d'intensités des images spectrales, dans la zone de fond qui est associée à la zone de cible considérée, avec des coefficients dont les valeurs sont des fonctions décroissantes d'un éloignement entre la zone de cible et un emplacement dans la zone de fond auquel correspondent les valeurs d'intensités des images spectrales. Ainsi, un élément de la scène qui est plus éloigné de la zone de cible est moins susceptible d'altérer une homogénéité spectrale de la zone de fond, pour le calcul du contraste, qu'un élément de la scène qui est plus proche de cette zone de cible. Un tel autre perfectionnement peut être particulièrement avantageux dans les situations /ii/ et /iii/ qui ont été énoncées plus haut.

De façon générale pour l'invention, l'image de synthèse peut être construite à l'étape /3/ en appliquant une correction d'échelle d'intensité à chaque image élémentaire, puis en attribuant à des points de l'image de synthèse qui sont dans la fenêtre d'analyse, séparément pour chacun de ces points, la plus grande des valeurs d'intensités au même point parmi les images élémentaires corrigées. Possiblement, la plus grande des valeurs à attribuer à chaque point de l'image de synthèse dans la fenêtre d'analyse peut être remplacée par une moyenne pondérée des mêmes valeurs d'intensités des images élémentaires corrigées, relative à ce même point et élevées à la puissance n, n étant un nombre entier positif non nul et fixe.

Enfin, l'invention peut être combinée avec l'un des deux modes de balayage suivants, pour déplacer la fenêtre d'analyse par rapport à la scène et ainsi appliquer le renfort de contraste à des endroits différents de la scène :

- soit sélectionner successivement plusieurs fenêtres d'analyse dans la même image multispectrale, et répéter la séquence des étapes /1/ à /4/ pour chacune des fenêtres d'analyse ;

- soit saisir successivement plusieurs images multispectrales, et répéter la séquence des étapes /1/ à /4/ pour chacune de ces images multispectrales en sélectionnant la fenêtre d'analyse de la même façon dans toutes les images multispectrales.

D'autres particularités et avantages de la présente invention apparaîtront dans la description ci-après d'exemples de mise en œuvre non limitatifs, en référence aux dessins annexés, dans lesquels :

- la figure 1, déjà décrite, est une représentation schématique d'une image multispectrale à laquelle l'invention peut être appliquée ;

- la figure 2, déjà décrite, représente un découpage de la fenêtre d'analyse qui a été utilisé avant l'invention pour calculer une valeur de contraste dans une image multispectrale ;

- la figure 3 est un diagramme synoptique des étapes d'un procédé conforme à l'invention, pour visualiser une image multispectrale ; et

- les figures 4a-4f représentent des agencements de zones de cible et de zones de fond, qui sont compatibles avec la présente invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

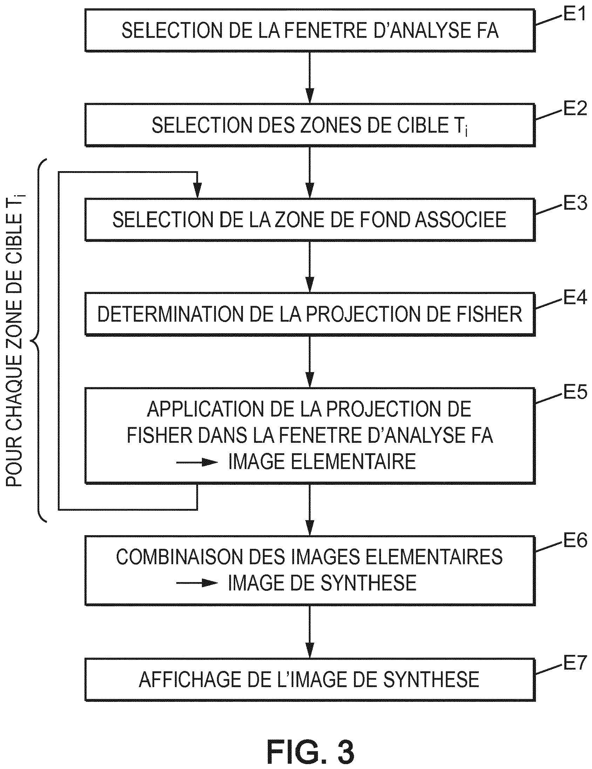

Le procédé qui est détaillé à la figure 3 peut être appliqué à une image multispectrale telle que représentée sur la figure 1. L'image multispectrale 10 peut être lue à partir d'un support de stockage de données, sur lequel elle a été enregistrée après avoir été saisie. Il s'agit alors d'un traitement différé de l'image multispectrale. Alternativement, l'image multispectrale 10 peut appartenir à un flux vidéo qui est saisi et visualisé en temps réel par un opérateur de surveillance. Le ou les appareil(s) de saisie de l'image multispectrale, une unité de traitement d'image apte à mettre le procédé de l'invention, et une unité d'affichage d'image peuvent être embarqués à bord d'un véhicule, par exemple un véhicule terrestre à fonction de surveillance, ou bien être intégrés dans un équipement individuel de visualisation tel qu'une paire de jumelles. Dans d'autres contextes d'utilisation de l'invention, le ou les appareil(s) de saisie de l'image multispectrale 10 peut (peuvent) être embarqué(s) à bord d'un aéronef, par exemple un drone aérien, alors que les unités de traitement et d'affichage d'image peuvent être situées dans un poste de contrôle et d'observation qui est statique et distant. Dans un tel contexte, les images multispectrales qui sont saisies sont transmises à l'unité de traitement, par signaux électromagnétiques d'une façon qui est connue en soi.

On rappelle que chaque image 11, 12, 13,... qui correspond séparément à l'une des bandes spectrales de l'image multispectrale 10, est appelée image spectrale.

A l'étape E1 (figure 3), la fenêtre d'analyse FA est placée dans l'image multispectrale 10, à une position qui peut être fixe par rapport à un cadre de limite spatiale externe de l'image 10, ou à une position qui peut être sélectionnée par l'opérateur de la surveillance. Par exemple, la fenêtre d'analyse FA peut ainsi être placée au centre de l'image multispectrale 10. Les dimensions de la fenêtre d'analyse FA peuvent varier notamment en fonction du nombre et de la taille des zones de cible, décrites ci-après. Par exemple, la fenêtre d'analyse FA peut être un carré de 101 x 101 points d'image.

Plusieurs zones de cible qui sont notées $T_1$, $T_2$, $T_3$, $T_4$,..., ou désignées génériquement par $T_i$, sont ensuite sélectionnées à l'intérieur de la fenêtre d'analyse FA à l'étape E2. Un des aspects de l'invention réside dans une telle utilisation de plusieurs zones de cible pour une même fenêtre d'analyse. Le contenu de l'image multispectrale 10 dans la fenêtre d'analyse FA est alors traité pour améliorer le contraste entre chaque zone de cible et une zone de fond qui lui est associée, indépendamment des autres zones de cible. Ce traitement produit une image élémentaire pour le contenu de l'image multispectrale 10 dans la fenêtre d'analyse FA, qui est distincte pour chaque zone de cible $T_1$, $T_2$, $T_3$, $T_4$,... Ces images élémentaires sont ensuite combinées ou fusionnées en une image de synthèse, qui est une représentation améliorée du contenu de l'image multispectrale 10 à l'intérieur de la fenêtre d'analyse FA. Si des fenêtres d'analyse différentes sont utilisées pour les étapes E2 à E5, les images élémentaires sont combinées ou fusionnées dans la zone d'intersection spatiale de ces fenêtres.

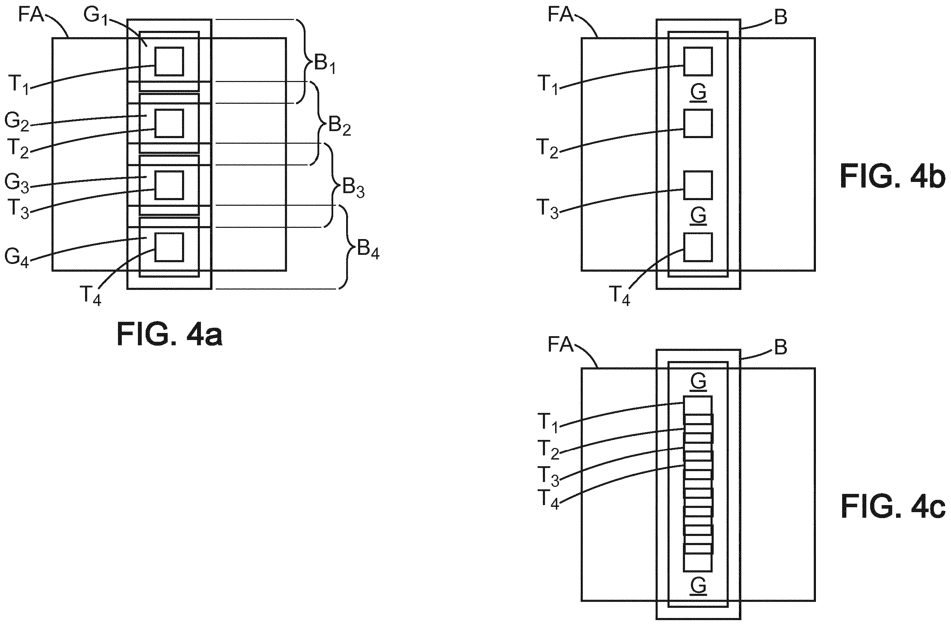

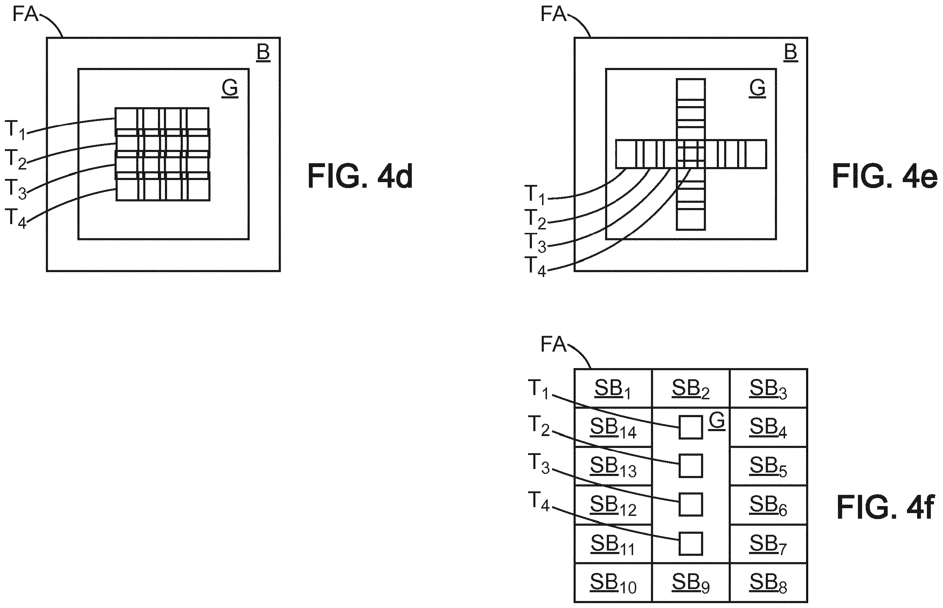

Les zones de cible $T_1$, $T_2$, $T_3$, $T_4$,... peuvent être alignées verticalement à l'intérieur de la fenêtre d'analyse FA, comme illustré par les figures 4a-4c et 4f. Un tel alignement vertical est particulièrement adapté pour surveiller un paysage terrestre en effectuant ensuite un déplacement horizontal de la fenêtre d'analyse FA dans le paysage. Alternativement, les zones de cible $T_1$, $T_2$, $T_3$, $T_4$,... peuvent être alignées horizontalement dans la fenêtre d'analyse FA, par exemple lorsque cette fenêtre d'analyse est ensuite déplacée dans le paysage selon une direction qui est contenue dans un plan vertical. Une telle disposition horizontale des zones de cible dans la fenêtre d'analyse peut être plus adaptée pour des images multispectrales qui sont saisies à partir d'un drone aérien. Alternativement encore, les zones de cible peuvent être regroupées en un pavé, selon la figure 4d, ou pour constituer une croix, selon la figure 4e. De telles configurations sont adaptées pour suivre des cibles qui sont susceptibles de se déplacer relativement lentement dans le paysage, entre deux images multispectrales saisies puis traitées successivement selon l'invention. Enfin, pour chaque disposition générale des zones de cible $T_1$, $T_2$, $T_3$, $T_4$,... dans la fenêtre d'analyse FA, deux zones de cible qui sont voisines peuvent être espacées l'une de l'autre, comme dans les figures 4a, 4b et 4f, ou présenter des recouvrements partiels, comme dans les figures 4c-4e, ou encore être contiguës sans recouvrement ni espace intermédiaire.

Par exemple, chaque zone de cible $T_1$, $T_2$, $T_3$, $T_4$,... peut être un carré de 3 x 3, 5 x 5 ou 7 x 7 points d'image.

La fenêtre d'analyse FA et les zones de cible $T_1$, $T_2$, $T_3$, $T_4$,... ayant été sélectionnées comme il vient d'être décrit, les étapes E3 à E5 sont effectuées séparément pour chaque zone de cible.

A l'étape E3, une zone de fond est associée à la zone de cible Ti pour laquelle la séquence des étapes E3 à E5 est en cours d'exécution. De façon générale, cette zone de fond est séparée de la zone de cible Ti par une zone de garde intermédiaire, pour que certaines cibles peu étendues qui sont partiellement contenues dans la zone de cible Ti ne débordent pas dans la zone de fond. Par exemple, la zone de garde peut avoir une épaisseur d'au moins 15 points d'image entre la zone de cible Ti et la zone de fond.

Selon une première possibilité pour l'invention qui est illustrée par la figure 4a, une zone de fond différente $B_1$, $B_2$, $B_3$, $B_4$,... peut être associée à chaque zone de cible $T_1$, $T_2$, $T_3$, $T_4$,... selon des dispositions relatives qui sont identiques pour toutes les zones de cible. Par exemple, chaque zone de cible $T_1$, $T_2$, $T_3$, $T_4$,... peut être entourée par la zone de fond $B_1$, $B_2$, $B_3$, $B_4$,... correspondante, celle-ci ayant des limites intérieure et extérieure qui peuvent être carrées, avec une zone de garde intermédiaire, notée $G_1$, $G_2$, $G_3$, $G_4$,... pour chaque couple de zones de cible et de fond Ti-Bi.

Dans les configurations illustrées par les figures 4b-4e, qui sont exclues de l'invention, une même zone de fond unique, notée B, peut être associée à toutes les zones de cible $T_1$, $T_2$, $T_3$, $T_4$,... Préférentiellement, la zone de fond B peut être disposée autour de l'ensemble des zones de cible $T_1$, $T_2$, $T_3$, $T_4$,... avec une zone de garde intermédiaire qui est notée G. Un avantage d'une telle seconde disposition est d'éviter qu'une des zones de cible ne recouvre la zone de fond qui est associée à une autre des zones de cible. Ainsi, pour une position de la fenêtre d'analyse FA, un élément de scène qui est situé dans la fenêtre d'analyse FA est traité pour calculer le contraste dans l'image multispectrale, soit en tant que cible potentielle à l'intérieur d'une au moins des zones de cible, soit en tant que fond de scène, d'une façon qui est cohérente pour toutes les zones de cible.

Des deuxièmes possibilités pour associer selon l'invention une zone de fond à chaque zone de cible $T_1$, $T_2$, $T_3$, $T_4$,... sont illustrées par la figure 4f, et décrites ci-après. Des segments de zone de fond qui sont notés respectivement $SB_1$-$SB_{14}$, sont définis autour des zones de cible $T_1$, $T_2$, $T_3$, $T_4$,..., avec une zone de garde G intermédiaire. Alors, la zone de fond qui est associée respectivement à chaque zone de cible Ti peut être constituée par la réunion de plusieurs des segments $SB_1$-$SB_{14}$ qui sont affectés à cette zone de cible Ti.

Selon une troisième possibilité pour définir la zone de fond qui est associée à chaque zone de cible Ti selon l'invention, on affecte initialement à chaque zone de cible Ti ceux des segments de zone de fond qui sont les plus proches spatialement de celle-ci. Par exemple, pour la configuration des zones de cible de la figure 4f, la zone de fond $B_1$ qui est associée à la zone de cible $T_1$ peut être la réunion des segments $SB_1$-$SB_5$ et $SB_{13}$-$SB_{14}$, la zone de fond $B_2$ qui est associée à la zone de cible $T_2$ peut être la réunion des segments $SB_4$-$SB_6$ et $SB_{12}$-$SB_{14}$, la zone de fond $B_3$ qui est associée à la zone de cible $T_3$ peut être la réunion des segments $SB_5$-$SB_7$ et $SB_{11}$-$SB_{13}$, et la zone de fond $B_4$ qui est associée à la zone de cible $T_4$ peut être la réunion des segments $SB_6$-$SB_{12}$.

Une quatrième possibilité pour définir la zone de fond qui est associée à chaque zone de cible Ti selon l'invention permet d'assurer que le contenu de l'image multispectrale dans cette zone de fond soit assez homogène spectralement. Pour cela, une signature spectrale peut être déterminée pour chacun des segments de zone de fond $SB_1$-$SB_{14}$. Une telle signature peut être par exemple un vecteur qui est constitué par les valeurs moyennes des intensités de chaque image spectrale 11, 12, 13,... calculées sur l'ensemble des points d'image de ce segment de zone de fond. Un tel vecteur possède donc une coordonnée distincte pour chaque image spectrale. Les signatures de tous les segments de zones de fond sont alors comparées entre elles, et le ou les segment(s) dont la (les) signature(s) est (sont) la (les) plus éloignée(s) de celles des autres segments est (sont) écartée(s). Seuls les segments de zone de fond qui restent après une telle discrimination peuvent être sélectionnés pour constituer la zone de fond Bi qui est associée à la zone de cible Ti.

Selon cet exemple, les signatures spectrales des segments de zone de fond sont données par la formule suivante, exprimée pour le segment de zone de fond SBj : $S_j|_k = (1/N_j) \cdot \Sigma$ {points d'image du segments SBj} $I_k$(point d'image), où j est un nombre entier qui dénombre les segments de zone de fond prédéfinis, notés $SB_j$ (j varie de 1 à 14 dans l'exemple de la figure 4f), $S_j$ est la signature spectrale du segment de zone de fond $SB_j$, k est un nombre entier qui dénombre les images spectrales 11, 12, 13,... qui constituent l'image multispectrale 10, $I_k$ est l'intensité de l'image spectrale k au point d'image considéré, $N_j$ est le nombre de points d'image dans le segment de zone de fond $SB_j$, et

$S_j|_k$ est la $k^{ème}$ coordonnée du vecteur de signature $S_j$. Alors, un angle de séparation entre deux des signatures peut être calculé selon la formule: $\theta_{j,j'}$ = Arccos[$(S_j \cdot S_{j'})/(|S_j| \cdot |S_{j'}|)$], où $(S_j \cdot S_{j'})$ désigne le produit scalaire des vecteurs de signatures $S_j$ et $S_{j'}$, $|S_j|$ désigne la norme du vecteur de signature $S_j$, Arccos est l'inverse de la fonction cosinus, et $\theta_{j,j'}$ est l'angle de séparation entre les deux vecteurs des signatures des segments de zone de fond $SB_j$ et $SB_{j'}$. Les angles de séparation qui sont ainsi obtenus pour toutes les paires de segments de zone de fond $(B_j, B_{j'})$ sont comparés entre eux, et ceux des segments de zone de fond $SB_j$ qui ne forment que des angles de séparation $\theta_{j,j'}$ qui sont faibles, avec la majorité des autres segments de zone de fond $SB_{j'}$, sont conservés pour participer aux zones de fond Bi qui sont associées respectivement aux zones de cible Ti.

De façon générale pour l'invention, il n'est pas nécessaire que chaque zone de fond soit contenue dans la fenêtre d'analyse FA, mais certaines des zones de fond peuvent déborder à l'extérieur de la fenêtre d'analyse FA. En outre, il est précisé que la zone de fond qui est associée à l'une des zones de cible n'entoure pas nécessairement cette dernière de façon complète, mais peut n'être disposée que sur certains de ses côtés. A titre d'exemple, chaque zone de fond ou segment de zone de fond peut avoir une dimension ou une épaisseur dans l'image multispectrale qui est supérieure ou égale à 3 points d'image, selon une direction spatiale qui est verticale ou horizontale par rapport à la scène.

L'étape E4 (figure 3) consiste à déterminer la projection de Fisher qui rend maximal le contraste entre chaque zone de cible Ti et la zone de fond Bi qui lui est associée. Une telle projection de Fisher est supposée connue de l'Homme du métier et a été rappelée dans la partie de cette description qui est relative à l'art antérieur, si bien qu'il n'est pas nécessaire de la décrire à nouveau.

Selon l'invention, l'intensité de chaque point d'image dans la zone de fond qui est associée à l'une des zones de cible, est pondérée en fonction de l'éloignement entre ce point d'image et la zone de cible, pour déterminer la projection de Fisher. Par exemple, si $I_k(x, y)$ désigne la valeur d'intensité du point d'image de coordonnées $(x, y)$ dans l'image spectrale k, l'intensité pondérée $I_{i/k}(x, y)$ à utiliser pour cette image spectrale k lors de la détermination de la projection de Fisher pour la zone de cible Ti et la zone de fond associée Bi peut être :

$$I_{i/k}(x, y) = \frac{1}{\sum_i \beta_i(x, y)} \times \sum_i \beta_i(x, y) \times I_k(x, y)$$

avec

$$\beta_i(x, y) = \sqrt{\left(x - x_{Ti}\right)^2 + \left(y - y_{Ti}\right)^2}^{-1}$$

où $x_{Ti}$ et $y_{Ti}$ sont les coordonnées du centre de la zone de cible $T_i$. Ainsi, des éléments de scène parasites qui sont contenus dans la zone de fond perturbent moins le renforcement du contraste qui est produit par la projection de Fisher, lorsqu'ils sont plus éloignés de la zone de cible. De façon générale, les valeurs des coefficients de pondération $\beta_i$ peuvent varier selon une fonction décroissante quelconque de la distance entre le point d'image dans la zone de fond et la zone de cible. Une telle pondération peut aussi être utilisée pour calculer les signatures des segments de zone de fond dans la quatrième possibilité qui a été présentée plus haut.

A l'étape E5 pour chacune des zones de cible $T_i$, la projection de Fisher qui a été obtenue pour cette zone de cible est ensuite appliquée à l'image multispectrale 10 à l'intérieur de la fenêtre FA. Une image élémentaire est ainsi obtenue, qui représente le contenu de l'image multispectrale 10 dans la fenêtre d'analyse FA avec un contraste maximal.

Toutes les images élémentaires qui sont ainsi obtenues à partir de chaque zone de cible Ti sont combinées à l'étape E6 pour construire une image de synthèse unique. Une telle combinaison peut être effectuée en retenant pour chaque point d'image dans la fenêtre d'analyse FA, celle des intensités en ce point parmi toutes les images élémentaires qui est la plus grande. Alternativement, les intensités de toutes les images élémentaires en ce point peuvent être élevées à une puissance p fixe, commune et positive, et l'intensité de l'image de synthèse au point d'image considéré peut être égale à la moyenne de ces intensités d'images élémentaires élevées à la puissance p.

Enfin, l'image de synthèse qui a été obtenue à l'étape E6 dans la fenêtre d'analyse FA est présentée à l'opérateur de surveillance à l'étape E7. Pour cela, elle peut être affichée sur un écran, ou plus généralement sur une unité d'affichage qui est prévue pour une observation visuelle. Eventuellement, pour faciliter le repérage de l'opérateur dans la scène, l'image qui est affichée peut être complétée à l'extérieur de la fenêtre d'analyse FA par l'une des images spectrales, par exemple par une image spectrale qui correspond à une voie d'acquisition de rayonnement thermique. Alternativement, l'image qui est affichée peut être complétée à l'extérieur de la fenêtre d'analyse FA par une combinaison de plusieurs images spectrales qui correspondent à des couleurs différentes dans l'intervalle visible, pour reconstituer une vision de jour en couleurs en dehors de la fenêtre d'analyse FA. Enfin, il est aussi possible de compléter l'image qui est présentée à l'opérateur en dehors de la fenêtre d'analyse FA, par une image de la scène qui est formée optiquement et transmise directement à l'unité d'affichage.

Il est entendu que les dimensions, formes et positions des zones de cible et de fond qui ont été données à titre d'exemples dans la description détaillée ci-dessus, peuvent être modifiées en fonction de l'application et du contexte de mise en œuvre. En particulier, elles peuvent être déterminées à partir de données supplémentaires, telles que l'éloignement et/ou la taille d'une cible qui est recherchée dans la scène imagée.

Enfin, il est entendu que d'autres détails de mise en œuvre de l'invention peuvent être modifiés tout en conservant les avantages qui ont été cités. Parmi ces avantages, une robustesse supérieure du décamouflage est obtenue grâce à l'invention, notamment dans les situations suivantes :

- le contraste est renforcé dans l'image de synthèse, même pour des situations de cible étendue, de cible bariolée et de cibles multiples ;
- le contraste est renforcé dans l'image de synthèse, même lorsque le fond de la scène contient des éléments parasites, ou est lui-même structuré ; et
- la sensibilité par rapport à la position de la fenêtre d'analyse relativement à une cible qui est présente dans la scène, est réduite pour le contraste de l'image de synthèse. De ce fait, l'invention est aussi efficace pour suivre une cible qui est mobile dans la scène entre deux images multispectrales qui sont saisies successivement, ou pour fixer une cible entre deux images qui sont saisies successivement avec une déviation de la ligne visée, telle que résultant d'un tremblement ou de vibrations qui sont transmises à l'appareil de saisie d'image.

## Revendications

1. Procédé de visualisation par un opérateur sur une unité d'affichage, d'une image multispectrale (10) formée de plusieurs images spectrales (11, 12, 13,...) d'une même scène qui ont été saisies à un même instant respectivement dans des intervalles spectraux séparés, le procédé comprenant les étapes successives suivantes :

   /1/ à l'intérieur de l'image multispectrale, sélectionner une fenêtre d'analyse (FA) correspondant à une partie de la scène et une pluralité de zones de cible ($T_1$, $T_2$, $T_3$, $T_4$,...) dans la fenêtre d'analyse, chaque zone de cible étant associée à une zone de fond et séparée de ladite zone de fond par une zone intermédiaire de sorte que chaque zone de cible ne soit pas contiguë avec la zone de fond qui est associée avec ladite zone de cible ;
   /2/ séparément pour chaque zone de cible ($T_1$, $T_2$, $T_3$, $T_4$,...) dans la fenêtre d'analyse (FA), exécuter les sous-étapes suivantes :

      /2-1/ déterminer une projection de Fisher à partir de valeurs d'intensités des images spectrales, ladite projection de Fisher étant une combinaison linéaire des images spectrales (11, 12, 13,...) qui optimise un contraste entre la zone de cible ($T_1$, $T_2$, $T_3$, $T_4$,...) et la zone de fond qui est associée à ladite zone de cible ; et
      /2-2/ appliquer la projection de Fisher déterminée à la sous-étape /2-1/ aux valeurs d'intensités des images spectrales (11, 12, 13,...) dans la fenêtre d'analyse (FA), de façon à obtenir une image élémentaire de la partie de scène qui est contenue dans la fenêtre d'analyse pour chaque zone de cible ($T_1$, $T_2$, $T_3$, $T_4$,...) sélectionnée à l'étape /1/ ; puis

   /3/ combiner les images élémentaires pour construire une image de synthèse relative à la partie de scène qui est contenue dans la fenêtre d'analyse (FA) ; et
   /4/ afficher une image de la scène sur l'unité d'affichage, en utilisant dans la fenêtre d'analyse (FA) l'image de synthèse qui a été obtenue à l'étape /3/.

   suivant lequel une zone de fond distincte (Bi) est associée à chaque zone de cible ($T_1$, $T_2$, $T_3$, $T_4$,...), avec un agencement desdites zones de fond tel qu'aucune zone de fond n'a de recouvrement avec l'une quelconque des zones de cible,
   le procédé étant **caractérisé en ce que**, à la sous-étape /2-1/ pour chaque zone de cible ($T_1$, $T_2$, $T_3$, $T_4$,...) de la fenêtre d'analyse (FA), la projection de Fisher est déterminée en pondérant les valeurs d'intensités des images spectrales (11, 12, 13,...), dans la zone de fond qui est associée à ladite zone de cible, avec des coefficients dont les valeurs sont des fonctions décroissantes d'un éloignement entre la zone de cible et un emplacement dans la zone de fond auquel correspondent les valeurs d'intensités des images spectrales.

2. Procédé selon la revendication 1, suivant lequel certaines au moins des zones de cible ($T_1$, $T_2$, $T_3$, $T_4$,...) présentent des recouvrements entre elles dans la fenêtre d'analyse (FA).

3. Procédé selon la revendication 1 ou 2, suivant lequel les zones de cible ($T_1$, $T_2$, $T_3$, $T_4$,...) sont alignées dans la fenêtre d'analyse (FA).

4. Procédé selon la revendication 3, suivant lequel la scène est une portion d'un paysage terrestre, et les zones de cible ($T_1$, $T_2$, $T_3$, $T_4$,...) sont alignées parallèlement à une direction qui est verticale ou horizontale par rapport au paysage terrestre.

5. Procédé selon la revendication 1 ou 2, suivant lequel les zones de cible ($T_1$, $T_2$, $T_3$, $T_4$,... ) sont disposées dans la fenêtre d'analyse (FA) de façon à former une croix ou un pavé.

6. Procédé selon l'une quelconque des revendications précédentes, suivant lequel la zone de fond qui est associée à chaque zone de cible ($T_1$, $T_2$, $T_3$, $T_4$,...) résulte d'une sélection d'au moins un segment de zone de fond parmi plusieurs segments de zone de fond ($SB_1$, $SB_2$,... , $SB_{14}$) qui sont susceptibles d'être associés à ladite zone de cible, ladite sélection étant réalisée pour réduire des écarts existant entre des signatures spectrales respectives desdits segments de zone de fond sélectionnés pour une même des zones de cible, et la zone de fond associée à chaque zone de cible est une réunion des segments de zone de fond sélectionnés pour ladite zone de cible.

7. Procédé selon l'une quelconque des revendications précédentes, suivant lequel, l'image de synthèse est construite à l'étape /3/ en appliquant une correction d'échelle d'intensité à chaque image élémentaire, puis en attribuant à des points de l'image de synthèse qui sont dans la fenêtre d'analyse (FA), séparément pour chacun desdits points, la plus grande des valeurs d'intensités au même point parmi les images élémentaires corrigées, ou bien en attribuant à chacun desdits points de l'image de synthèse dans la fenêtre d'analyse, une moyenne pondérée desdites valeurs d'intensités des images élémentaires corrigées, relatives audit point et élevées à la puissance n, n étant un nombre entier positif non nul et fixe.

8. Procédé selon l'une quelconque des revendications 1 à 7, suivant lequel plusieurs fenêtres d'analyse (FA) sont sélectionnées successivement dans l'image multispectrale (10), et la séquence des étapes /1/ à /4/ est répétée pour chacune des fenêtres d'analyse.

9. Procédé selon l'une quelconque des revendications 1 à 7, suivant lequel plusieurs images multispectrales (10) sont saisies successivement, et la séquence des étapes /1/ à /4/ est répétée pour chacune des images multispectrales en sélectionnant la fenêtre d'analyse (FA) de la même façon dans toutes lesdites images multispectrales.

**Patentansprüche**

1. Verfahren zur Anzeige eines multispektralen Bildes (10) auf einer Anzeigeeinheit durch einen Bediener, wobei das multispektrale Bild (10) aus mehreren, zum gleichen Zeitpunkt jeweils in getrennten Spektralintervallen aufgenommenen Spektralbildern (11, 12, 13, ...) ein und derselben Szene besteht, wobei das Verfahren die folgenden, aufeinander folgenden Schritte umfasst:

/1/ im multispektralen Bild das Auswählen eines Analysefensters (FA), das einem Teil der Szene entspricht, und einer Vielzahl von Zielbereichen (T1, T2, T3, T4,...) im Analysefenster, wobei jeder Zielbereich einem Hintergrundbereich zugeordnet und von diesem Hintergrundbereich durch einen Zwischenbereich getrennt ist, so dass keiner der Zielbereiche an den Hintergrundbereich angrenzt, der dem Zielbereich zugeordnet ist;
/2/ das für jeden Zielbereich (T1, T2, T3, T4,...) im Analysefenster (FA) getrennte Durchführen folgender Teilschritte:

/2-1/ die Bestimmung einer Fischer-Projektion anhand von Intensitätswerten der Spektralbilder, wobei die Fischer-Projektion eine lineare Kombination der Spektralbilder (11, 12, 13, ...) ist, die einen Kontrast zwischen dem Zielbereich (T1, T2, T3, T4,...) und dem zugeordneten Hintergrundbereich optimiert; und
/2-2/ die Anwendung der in Teilschritt /2-1/ bestimmten Fischer-Projektion auf die Intensitätswerte der Spektralbilder (11 , 12, 13,...) im Analysefenster (FA), so dass für jeden in Schritt /1/ ausgewählten Zielbereich (T1, T2, T3, T4,...) ein elementares Bild des im Analysefenster enthaltenen Szenenteils erhalten wird;

/3/ das Kombinieren der elementaren Bilder, um ein Synthesebild des im Analysefenster (FA) enthaltenen Szenenteils zu bilden; und
/4/ das Anzeigen eines Bilds der Szene auf der Anzeigeeinheit, wobei im Analysefenster (FA) das Synthesebild verwendet wird, das in Schritt /3/ erhalten wurde;

und jedem Zielbereich (T1, T2, T3, T4,...) ein anderer Hintergrundbereich (B1) zugeordnet ist, wobei die Hintergrundbereiche so angeordnet sind, dass sich kein Hintergrundbereich mit einem der Zielbereiche überschneidet, wobei das Verfahren **dadurch gekennzeichnet ist, dass** in Teilschritt /2-1/ für jeden Zielbereich (T1, T2, T3, T4,...) des Analysefensters (FA) die Fischer-Projektion bestimmt wird, indem die Intensitätswerte der Spektralbilder (11, 12, 13, ...) in dem diesem Zielbereich zugeordneten Hintergrundbereich mit Koeffizienten gewichtet werden, deren Werte abnehmende Funktionen einer Entfernung zwischen dem Zielbereich und einer Position der Intensitätswerte der Spektralbilder im Hintergrundbereich sind.

2. Verfahren nach Anspruch 1, in dem sich zumindest einige der Zielbereiche (T1, T2, T3, T4,...) im Analysefenster (FA) überschneiden.

3. Verfahren nach Anspruch 1 oder 2, in dem die Zielbereiche (T1, T2, T3, T4,...) im Analysefenster (FA) ausgerichtet sind.

4. Verfahren nach Anspruch 3, in dem die Szene ein Abschnitt einer terrestrischen Landschaft ist und die Zielbereiche (T1, T2, T3, T4,...) parallel zu einer Richtung ausgerichtet sind, die vertikal oder horizontal zur terrestrischen Landschaft verläuft.

5. Verfahren nach Anspruch 1 oder 2, in dem die Zielbereiche (T1, T2, T3, T4,...) im Analysefenster (FA) so angeordnet sind, dass sie ein Kreuz oder einen Block bilden.

6. Verfahren nach einem der vorhergehenden Ansprüche, in dem der jeder Zielfläche (T1, T2, T3, T4,...) zugeordnete Hintergrundbereich aus einer Auswahl von mindestens einem Hintergrundbereichssegment aus einer Vielzahl von Hintergrundbereichssegmenten (SB1, SB2, ..., SB14) resultiert, die dem Zielbereich zugeordnet werden können, wobei die Auswahl so getroffen wird, dass bestehende Abstände zwischen den jeweiligen spektralen Signaturen der für einen der Zielbereiche ausgewählten Hintergrundbereichssegmente verringert werden, und der jedem Zielbereich zugeordnete Hintergrundbereich eine Zusammenstellung der für den Zielbereich ausgewählten Hintergrundbereichssegmente ist.

7. Verfahren nach einem der vorhergehenden Ansprüche, in dem das synthetische Bild in Schritt /3/ gebildet wird, indem auf jedes Elementarbild eine Korrektur der Intensitätsskala angewendet wird und Punkten des synthetischen Bildes, die sich im Analysefenster (FA) befinden, jeweils separat der größte Intensitätswert der korrigierten Elementarbilder zugeordnet wird, oder indem jedem der Punkte des Synthesebildes im Analysefenster ein gewichteter Mittelwert der Intensitätswerte der relativ zu diesem Punkt korrigierten und in die n-te Potenz erhobenen Elementarbilder zugeordnet wird, wobei n eine feste positive ganze Zahl ungleich Null ist.

8. Verfahren nach einem der Ansprüche 1 bis 7, bei dem eine Vielzahl von Analysefenstern (FA) nacheinander im multispektralen Bild (10) ausgewählt wird und die Folge der Schritte /1/ bis /4/ bei jedem Analysefenster wiederholt wird.

9. Verfahren nach einem der Ansprüche 1 bis 7, in dem eine Vielzahl von Multispektralbildern (10) nacheinander erfasst wird und die Folge der Schritte /1/ bis /4/ bei jedem multispektralen Bild wiederholt wird, indem das Analysefenster (FA) bei allen multispektralen Bildern auf die gleiche Weise ausgewählt wird.

**Claims**

1. Method for displaying by an operator on a display unit, a multispectral image (10) formed of a plurality of spectral images (11, 12, 13,...) of one and same scene that have been captured simultaneously in separate spectral bands respectively, the method comprising the following successive steps:

/1/ within the multispectral image, selecting an analysis window (FA) corresponding to a portion of the scene and a plurality of target regions ($T_1$, $T_2$, $T_3$, $T_4$,...) in the analysis window, each target region being associated with a background region and separated from said background region by an intermediate region so that each target region is not adjacent with the background region that is associated with said target region;
/2/ separately for each target region ($T_1$, $T_2$, $T_3$, $T_4$,...) in the analysis window (FA), performing the following sub-steps:

/2-1/ determining a Fisher projection based on intensity values of the spectral images, said Fisher projection being a linear combination of the spectral images (11, 12, 13,...) which optimises a contrast between the target region ($T_1$, $T_2$, $T_3$, $T_4$,...) and the background region that is associated with said target region; and
/2-2/ applying the Fisher projection determined in sub-step /2-1/ to the intensity values of the spectral images (11, 12, 13,...) in the analysis window (FA), so as to obtain a basic image of the scene portion that is contained in the analysis window for each target region ($T_1$, $T_2$, $T_3$, $T_4$,...) selected in step /1/; then

/3/ combining the basic images in order to form a synthesis image relative to the scene portion that is contained in the analysis window (FA); and
/4/ displaying an image of the scene on the display unit, using in the analysis window (FA) the synthesis image that was obtained in step /3/,

wherein a distinct background region (Bi) is associated with each target region ($T_1$, $T_2$, $T_3$, $T_4$,...), with an arrangement of said background regions such that none of the background regions overlaps with any one of the target regions, the process being **characterised in that**, in sub-step /2-1/ for each target region ($T_1$, $T_2$, $T_3$, $T_4$,...) of the analysis window (FA), the Fisher projection is determined by weighting the intensity values of the spectral images (11, 12, 13,...), in the background region that is associated with said target region, with coefficients having values which are decreasing functions of a distance between the target region and a location in the background region to which the intensity values of the spectral images correspond.

2. Method according to claim 1, wherein at least some of the target regions ($T_1$, $T_2$, $T_3$, $T_4$,...) have overlaps between them in the analysis window (FA).

3. Method according to claim 1 or 2, wherein the target regions ($T_1$, $T_2$, $T_3$, $T_4$,...) are aligned in the analysis window (FA).

4. Method according to claim 3, wherein the scene is a portion of a terrestrial landscape, and the target regions ($T_1$, $T_2$, $T_3$, $T_4$,...) are aligned parallel to a direction that is vertical or horizontal with respect to the terrestrial to the landscape.

5. Method according to claim 1 or 2, wherein the target regions ($T_1$, $T_2$, $T_3$, $T_4$,...) are arranged in the analysis window (FA) so as to form a cross or a tile.

6. Method according to any one of the preceding claims, wherein the background region that is associated with each target region ($T_1$, $T_2$, $T_3$, $T_4$,...) results from a selection of at least one background region segment among several background region segments ($SB_1$, $SB_2$,..., $SB_{14}$) that may be associated with said target region, said selection being carried out for reducing differences existing between respective spectral signatures of said background region segments selected for one and same of the target regions, and the background region associated with each target region is a putting-together of the background region segments selected for said target region.

7. Method according to any one of the preceding claims, wherein, the synthesis image is formed in step /3/ by applying a correction of intensity scale to each basic image, then by allocating to points of the synthesis image that are in the analysis window (FA), separately for each of said points, the largest of the intensity values at the same point from the basic images corrected, or by allocating to each of said points of the synthesis image in the analysis window, a weighted average of said intensity values of the basic images corrected, relative to said point and raised to power n, n being a non-zero and fixed positive integer.

8. Method according to any one of claims 1 to 7, wherein a plurality of analysis windows (FA) are selected successively in the multispectral image (10), and the sequence of steps /1/ to /4/ is repeated for each of the analysis windows.

9. Method according to any one of claims 1 to 7, wherein a plurality of multispectral images (10) are successively captured, and the sequence of steps /1/ to /4/ is repeated for each of the multispectral images by selecting the analysis window (FA) in the same manner in all of said multispectral images.

FIG. 1

FIG. 2

SELECTION DE LA FENETRE D'ANALYSE FA — E1

SELECTION DES ZONES DE CIBLE $T_i$ — E2

POUR CHAQUE ZONE DE CIBLE $T_i$

SELECTION DE LA ZONE DE FOND ASSOCIEE — E3

DETERMINATION DE LA PROJECTION DE FISHER — E4

APPLICATION DE LA PROJECTION DE FISHER DANS LA FENETRE D'ANALYSE FA → IMAGE ELEMENTAIRE — E5

COMBINAISON DES IMAGES ELEMENTAIRES → IMAGE DE SYNTHESE — E6

AFFICHAGE DE L'IMAGE DE SYNTHESE — E7

**FIG. 3**

FIG. 4b

FIG. 4c

FIG. 4a

EP 3 591 610 B1

**FIG. 4d**

FA

B

G

T$_1$
T$_2$
T$_3$
T$_4$

**FIG. 4e**

FA

B

G

T$_1$
T$_2$
T$_3$
T$_4$

**FIG. 4f**

FA

T$_1$
T$_2$
T$_3$
T$_4$

| SB$_1$ | SB$_2$ | SB$_3$ |
| SB$_{14}$ | G | SB$_4$ |
| SB$_{13}$ | | SB$_5$ |
| SB$_{12}$ | | SB$_6$ |
| SB$_{11}$ | | SB$_7$ |
| SB$_{10}$ | SB$_9$ | SB$_8$ |

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3011663 A1

**Littérature non-brevet citée dans la description**

- **F. GOUDAIL et al.** Some practical issues in anomaly détection and exploitation of regions of interest in hy-perspectral images. *Applied Optics,* vol. 45 (21), 5223-5236